# EUROPEAN PATENT APPLICATION

(11) **EP 4 628 262 A1**
(43) Date of publication of application: **08.10.2025**
(21) Application number: 25163631.2
(22) Date of filing: 13.03.2025
(51) Int. Cl.: B25J 9/00, B25J 9/02, B25J 9/04, B25J 11/00, B25J 15/00, B25J 15/06, B65B 25/04, B65G 47/91

(54) **METHOD AND DEVICE FOR MOVING PIECE GOODS FROM A SUPPLY DEVICE TO A RECEIVING DEVICE**

(30) Priority: 03.04.2024 NL 2037389; 30.01.2025 NL 2039710
(71) Applicant: MDE Automation B.V., 4691RZ Tholen (NL)
(72) Inventor: MOERLAND, Pieter Marinus Anthonie, 4691 RZ Tholen (NL)
(74) Representative: IP Maison

(57) **Abstract**

The present invention relates to a device for moving piece goods from a supply device to a receiving device, comprising:
- A supply device, such as a conveyor belt, for delivering piece goods;
- A receiving device, such as a tray, for receiving piece goods;
wherein
- The supply device and the receiving device are essentially in the same plane;
- A suspension point located above the plane, relative to which a first part of a:
- telescopic arm is suspended at a first location thereof so as to be rotatable about two axes of rotation,
- which axes of rotation each extend substantially parallel to the plane and at a, preferably straight, angle to each other, so that
- a second location, located at a distance towards the plane of the first location, formed by an end of the first part of the telescopic arm:
- is movable relative to the plane with a directional component in two mutually perpendicular directions parallel to the plane; and where
- the telescopic arm comprises a second part, which is telescopically movable relative to the first part in a direction from the first location to the second location, thus with a directional component from the suspension point to and from the plane,

- which second part is provided on a side facing the plane with an engaging means for engaging at least one of the piece goods.

The invention further relates to an assembly of devices of the aforementioned type, as well as to a method for operating these devices.

## Description

The present invention relates to a method and device for moving piece goods from a supply device to a receiving device and to an array of such devices. Devices for this purpose are known in the art. It is, for example, common to use robots for goods handling. The robots used for such purpose are often of the so called SCARA robot type, or of the DELTA robot type. SCARA robots have two arms connected to a common point, and DELTA robots formally three, although versions with four or five arms (DELTA 4 and DELTA 5) also exist.

When handling piece goods, like fruit for instance, multiple robots of a certain type may be used in parallel. However, in applications where the piece goods are to be positioned close to each other, or in other orientations than all in one line, the required working areas of the robots may overlap, and their arms, may interfere. In such cases, SCARA and to a larger extend DELTA robots, cannot be applied.

The DELTA configuration in which the arms of a DELTA robot are configured, is very spacious, and does not allow other objects or robots to interfere. This renders the DELTA robot in general unsuitable for being arranged in an array with similar DELTA robots, for the purpose of moving piece goods from a supply device to a receiving device, as their arms cannot intersect each other.

It is therefore a purpose of the present invention to provide a device for moving piece goods from a supply device to a receiving device and to provide an array of such devices.

The invention therefore relates to a device for moving piece goods from a supply device to a receiving device, comprising a supply device, such as a conveyor belt, for delivering piece goods; a receiving device, such as a tray, for receiving piece goods, wherein the supply device and the receiving device may be mainly in the same plane, a suspension point located above the plane, relative to which a first part of a telescopic arm is suspended at a first location thereof so as to be rotatable about two axes of rotation, which axes of rotation each extend substantially parallel to the plane and at a, preferably straight, angle to each other, so that a second location, located at a distance towards the plane of the first location, formed by an end of the first part of the telescopic arm is movable relative to the plane with a directional component in two mutually perpendicular directions parallel to the plane; and where the telescopic arm comprises a second part, which is telescopically movable relative to the first part in a direction from the first location to the second location, thus with a directional component from the suspension point to and from the plane, which second part is provided on a side facing the plane with an engaging means for engaging at least one of the piece goods.

The device according to the invention has the benefit that the device has a larger working area than a DELTA robot with the same arm length and arranged at the same height. Additionally, as there is only a single arm, the device according to the invention allows to use multiple devices of the same kind to be operated closely to each other, without their arms interfering with one another. This is a great benefit compared with DELTA robots, that have practically their entire working area as their footprint as well, which impedes positioning identical devices close to each other, and moreover, impedes their working areas to overlap.

In a preferred embodiment of the present invention, the first and second parts of the telescopic arm are mutually rotatable about a rotation axis extending coaxially with respect to both parts. In other words, the first part can rotate around the second part, of the second part can rotate within the first part. This allows to rotate a piece good that was picked up by the device from the supply device before positioning it on the receiving device. Such property may be desired when the piece goods are supplied in a random rotational orientation and are to be delivered in the same orientation.

In a further embodiment, all rotational and translational movements of the telescopic arm can be driven individually and controllably. This means that all movements are independent, and all movements are powered by a (separate) drive and can be controlled. This control means that the movements can be programmed, in particular based on information about the positioning of the piece goods and for instance retrieved from optical detection means such as a camera.

The device according to the invention may comprise a separate drive such as a servo motor for each rotational and/or translational movement, wherein the various drives are cascaded at the suspension point. Cascaded means that a first motor is coupled to the suspension point, for rotating a first carrier with respect to the suspension point around a first axis of rotation. A second motor is carried by the first carrier, for rotating a second carrier with respect to the first carrier, and so on. Altogether, multiple degrees of freedom are obtained.

In a further embodiment of the device according to the invention, at least one of the first and second parts of the telescopic arm, preferably an outer casing thereof, is made of carbon. Carbon has both the property of being light weighted, and relatively stiff. This makes the material suitable for forming the first and second parts of the telescopic arm of. As the telescopic arm is supported remote from the engaging means, torsion over its full length can take place, and this may lead to inaccuracies. For this reason, the stiffer the material used is, the better the performance of the device according to the invention. Additionally, the lower the weight of the arm, the less force is required to accelerate or decelerate it, so also the lighter the arm, the faster the device according to the invention is.

In order to keep the engaging means within a certain distance from the plane during use, the device according to the invention may be designed to extend the telescopic arm the more, the more the deflection around one of the axes of rotation is.

Such extension as a function of one or more rotation angle may be implemented in a mechanical manner, but preferably the device according to the invention comprises a controller, to - preferably individually - control the drives for the rotational and translational movements.

The engaging device may be of any kind suitable for a specific purpose, such as various types of grippers, or - for instance for handling fruit like apples it may comprise a suction cup. Such suction cup can be operated by the same controller that controls the drives, and a vacuum tube for operating the suction cup may be guided through a hollow space inside the telescopic arm.

As the telescopic arm rotates, the orientation of the engaging device carried by its lower end with respect to the horizontal plane varies. For a suction cup, this may in general not be a problem. However, in certain circumstances it may be desired that the orientation with respect to the support remains stable, for instance exactly horizontal or vertical. Some engaging devices may be easily configured to remain in position by means of gravity, but others don't. Therefore, in an embodiment, the engaging device may be suspended on a carrying platform, that is both coupled to the telescopic arm, as to an auxiliary (telescopic) arm, which may extend closely to the first auxiliary arm, and together with the carrying platform and a connection at the suspension point, may form a parallelogram, in order to remain in the same (for instance horizontal or vertical) orientation.

In a more advanced embodiment, the device according to the invention comprises a suspension for the engaging means, which is electronically controlled, in order not to require any mechanical transmission, as these may occupy space, and introduce inaccuracies. In an advanced embodiment, the suspension comprises a pair of mutually rotatable bodies, each rotatable over an axis of rotation that is directed to the other, wherein the bodies lie against each other at a sectional plane that is under an angle with a plane perpendicular to both axes of rotation, in an orientation wherein the axes coincide. Both bodies may be tapered, and for instance disc shaped. In one embodiment the two bodies form a cylinder, that is sliced under an angle with a plane perpendicular to its length axis. When their mutual rotational orientation changes, the angle under which both bodies extend changes. A second, straight, rotation may be used to direct the angle in the desired direction.The invention in particular relates to a plurality of devices of the above described kind, arranged in an array, designed to jointly pack piece goods in a first mutual orientation and place them in a second mutual orientation different from the first orientation.

Herein, each of the devices of the assembly may have a working space or area, defined as the space or area wherein the engaging means can be moved, wherein the working areas of different devices overlap. Multiple devices may be working in the overlapping area at the same time, that is, simultaneously. Herewith the assembly allows to pack piece goods in a first mutual orientation and place them in a second mutual orientation different from the first orientation, wherein the piece goods may be positioned closed to each other in the second orientation, and moreover, a transition from a first mutual orientation to a second mutual orientation, wherein the piece goods follow paths that cross each other is made possible.

The devices according to the invention may be suspended on a common suspension point so that all devices move the piece goods with respect to the same suspension point. When havingsuch a common suspension point, their shafts may be positioned at a mutual distance of less than 25 cm and in particular less than 22 cm and in particular between 10 and 20 cm, and/or about 15 cm.

The invention will now be elucidated with reference to the following figures. Herein:
- Figure 1 shows a perspective view of a device according to the invention;
- Figure 2 shows a first perspective view of an array of devices according to the invention;
- Figure 3 shows a second perspective view of the devices from figure 2;
- Figure 4 shows a third perspective view of the devices from figures 2 and 3;
- Figure 5 shows a perspective view of a detail of an embodiment according to the invention;
- Figure 6 shows a perspective detail of an open view of a detail of the embodiment from figure 5;
- Figure 7 shows a controller for a device according to figure 5 and 6; and
- Figure 8 shows a detail of a first embodiment of a suspension according to the invention for a gripper;
- Figure 9 shows a perspective view of a second embodiment of a suspension according to the invention in a first orientation; and
- Figure 10 shows a perspective view of a second embodiment of a suspension according to the invention in a second orientation.

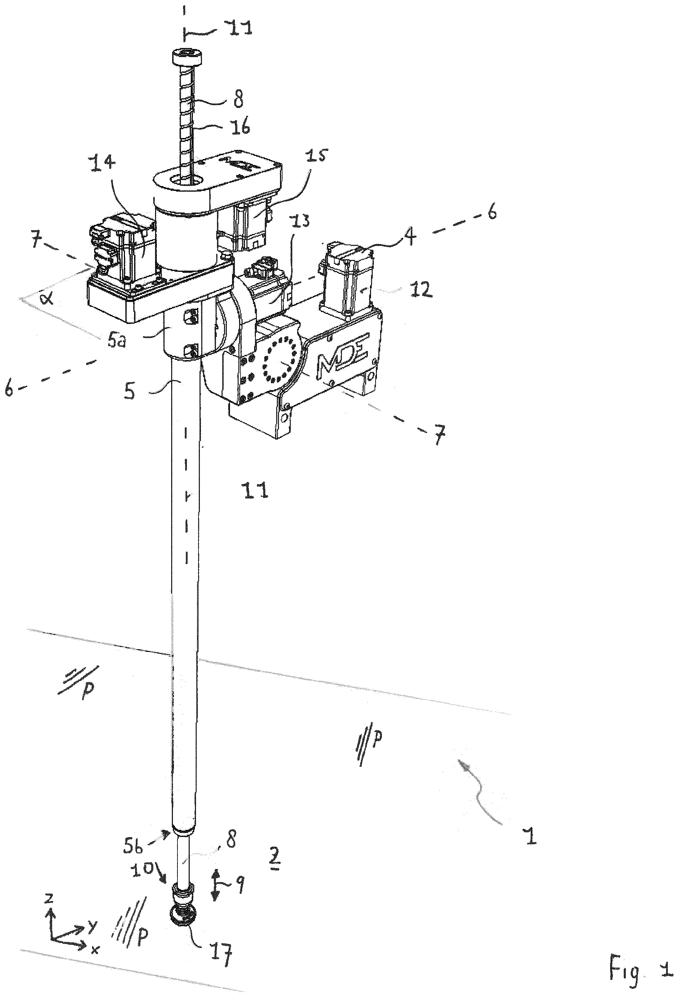

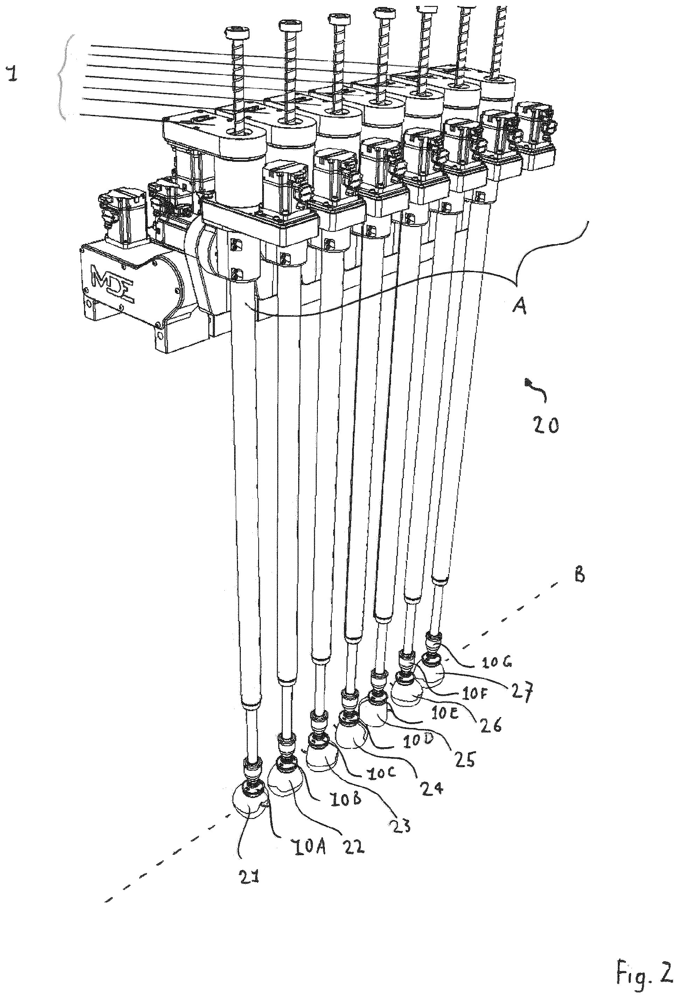

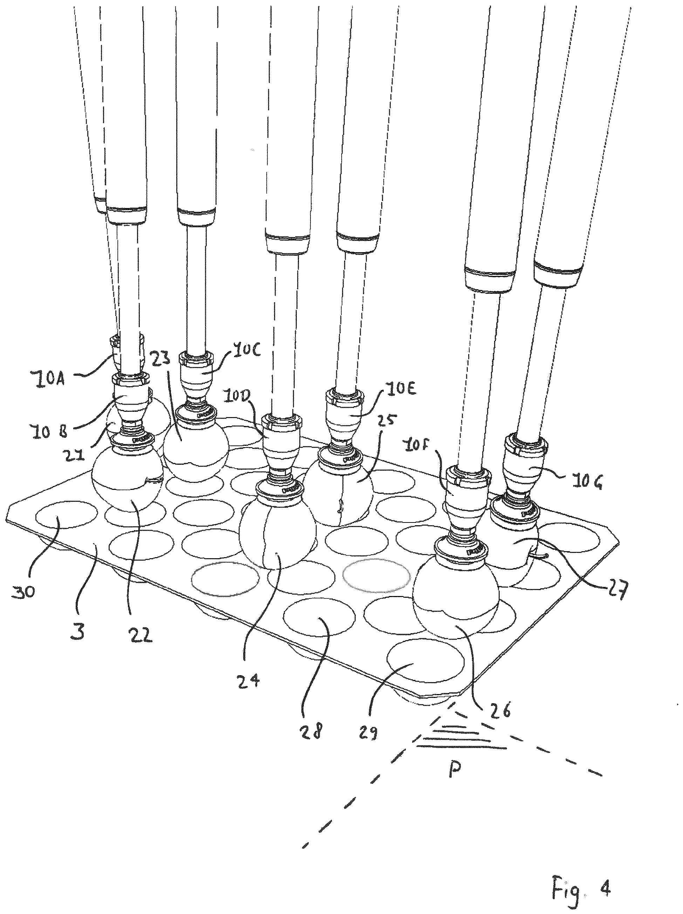

Figure 1 shows a perspective view of a device 1 according to the invention, for moving piece goods (visible in figure 2 and 4) from a supply device 2, formed by a conveyor belt 2, to a receiving device (3, visible in figure 4), for receiving said piece goods, wherein the supply device 2 and the receiving device 3 are mainly in the same plane P (x, y), as well as a suspension point 4 located above the plane, that is, at a distance in the z-direction, relative to the plane P. The device 2 has a first part 5 of a telescopic arm 5, 8, suspended at a first location 5a thereof so as to be rotatable about two axes of rotation 6, 7, which axes of rotation 6, 7 each extend substantially parallel to the plane P that extends in the x, y direction, and at a straight angle alpha to each other, so that a second location 5b, located at a distance towards the plane P of the first location, formed by an end of the first part of the telescopic arm 5 is movable relative to the plane P with a directional component in two mutually perpendicular directions x, y parallel to the plane P and where the telescopic arm comprises a second part 8, which is telescopically movable relative to the first part 5 in a direction 9 from the first location to the second location, thus with a directional component from the suspension point to and from the plane P, which second part 8 is provided on a side facing the plane P with an engaging means 10 for engaging at least one of the piece goods. The first and second parts 5, 8 of the telescopic arm are mutually rotatable about a rotation axis 11 extending coaxially with respect to both parts 5, 8, and in the orientation shown in figure 1, in the z direction, perpendicular to the plane P. Once the arm 5, 8 is rotated around axes 6, 7, the coaxially extending rotation axis 11 is no longer in the z direction.

The device 1 comprises a first drive 12 for the rotational movement around axis 7, a second drive 13 for the rotational movement around axis 6, a third drive 14 for the rotational movement around axis 11 and a fourth drive 15 for the translational movement along axis 11, wherein the various drives are cascaded (arranged in series) at the suspension point 4. The second part 8 of the telescopic arm 8 is provided with a groove 16 that allows drive 15 to translate the second part 8 of the telescopic arm with respect to the first part 5 of the telescopic arm. In the embodiment shown, the first part 5, which is an outer casing, of the telescopic arm and/or the second part 8 of the telescopic arm may be made of a carbon material.

Figure 2 shows a first perspective view of an assembly 20 of devices 1 according to the invention, arranges in an array A. The assembly of devices 1 according to the invention are arranged in an array A, and they are designed to jointly pick piece goods 21-27, in this case formed by apples, by means of their engagement means 10A-10G, in a first mutual orientation. In this first mutual orientation, the apples are all arranged on a line B, but any other first orientation within the working areas of the individual devices 1 is possible. By individually and independently moving the telescopic arms 5, 8 of the array A of devices 1, the piece goods can be put in any suitable second mutual orientation. To this end, the arms may be configured and be controlled to move simultaneously, to swiftly bring the piece goods in the second orientation. Piece goods may follow crossing paths, and may pass one another during movement.

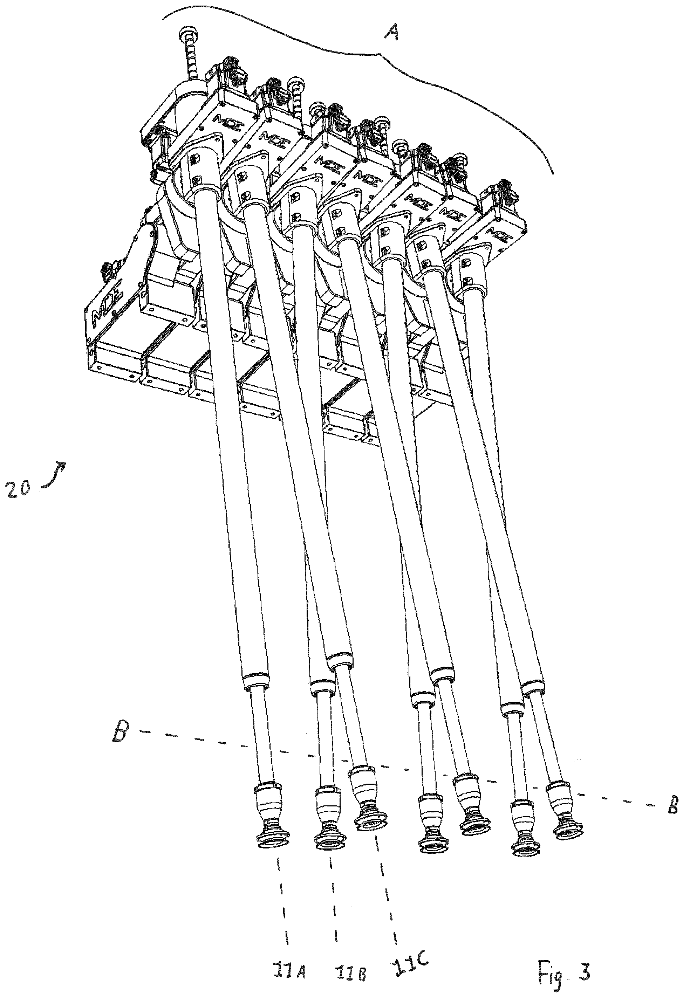

Figure 3 shows a second perspective view of the array A devices from figure 2, with their telescopic arms in a mutual orientation that is different from the (parallel) orientation shown in figure 2. The array of devices may put piece goods that are picked up from the supply device 2 on a receiving device 3 (shown in figure 4) in a second orientation, different from the first orientation (on line B) on the receiving device 3.

In general, an array of devices according to the invention is capable to deliver a number of piece goods in any desired orientation. In particular such orientations may comprise tetris-block-shaped orientations, or in other words, positions at (multitudes of) equal distances in perpendicular directions.

Figure 4 shows a third perspective view of the devices from figures 2 and 3, together with a receiving device 3, formed by a tray. In this example, the tray comprises pre-defined receiving positions formed by cavities (28-30 for example), in which the piece goods 21-27 can be placed. Such pre-defined positions are optional and embodiments with different receiving devices are thinkable too.

As indicated in figure 4, the receiving device is in the same plane P as the supply device 2 in figure 1. Throughout this application, the term "essentially in the same plane" means in the same plane, or in a parallel planes at a mutual distance in a height (z) direction that is within the reach to which the telescopic arm can be extended and/or under a slight mutual angle, that is less than 15 degrees, preferably less than 10 degrees and most preferably less than 5 degrees.

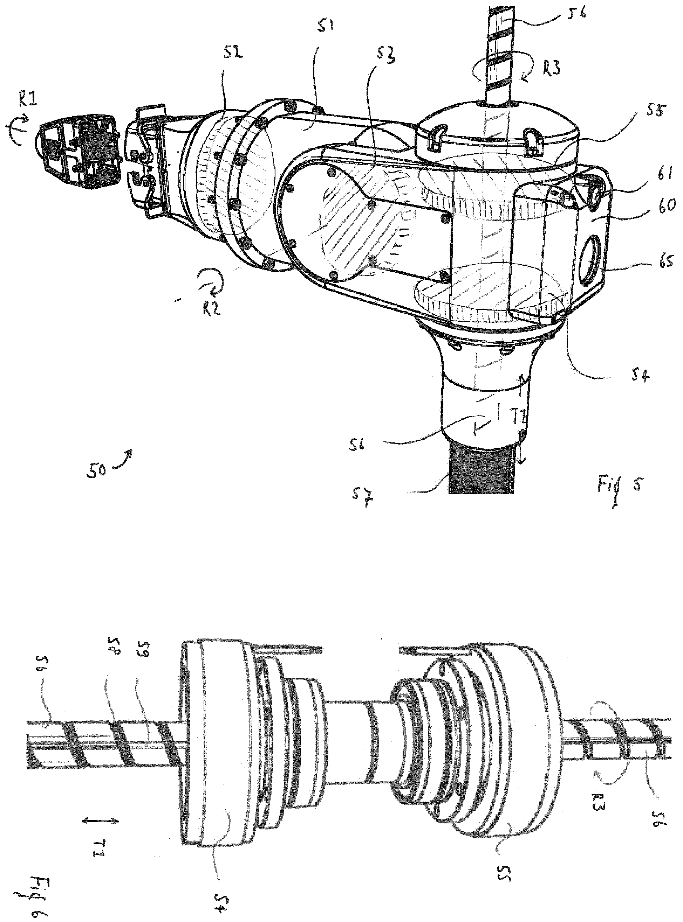

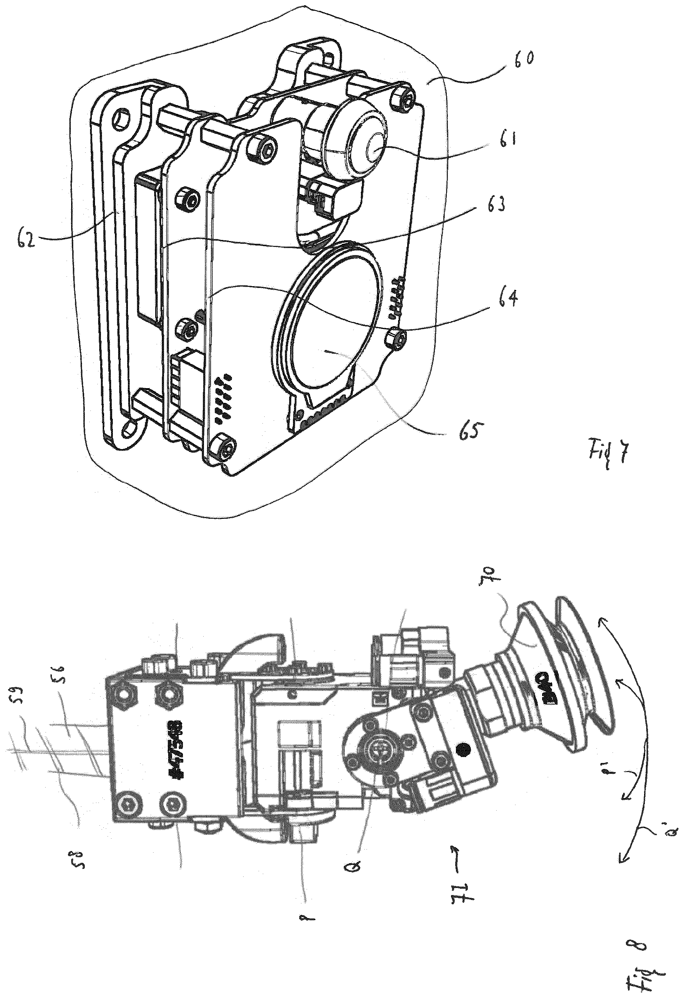

Figure 5 shows a perspective view 50 of a detail of a compact embodiment 51 of the device for moving piece goods according to the invention. The embodiment 51 comprises two harmonic drive motors 52, 53, for rotational movements R1 (gripper 70 - see figure 8 - movement in X direction), R2 (gripper 70 movement in Y direction) respectively, and two direct drive motors 54, 55, together for rotational movement R3 (gripper 70 rotation) and translation T1 (gripper 70 movement in Z direction). The direct drive motors are significantly smaller than the drives shown in the embodiment according to figures 1-4, as they - implicitly because they are direct drives - do not comprise a gear. Additionally, they comprise control logic, integrated in their essentially disc shaped housing. Due to the small size, robots can be positioned closer to each other in an array. Moreover, the integration of the gear in the harmonic drive motors leads to a higher precision of the device in its entirety. The same effect is enlarged by the use of the two direct drive motors, having no gears at all.

Figure 6 shows a perspective detail of an open view of a detail of the embodiment from figure 5. The second part of the telescopic arm comprises a shaft. Visible are direct drives 54 and 55 for driving the rotation R3 and the translation T1. The direct drive 55 acts on the straight groove 59 in the shaft 56, while the direct drive 54 acts on the helix shaped groove 58.

Figure 7 shows a housing 60, comprising a controller for direct drives 54 and 55 from figures 5 and 6. The housing itself is also visible in figure 5. The housing comprises a number of stacked printed circuit boards 62, 63, 64, and a release knob 61, which can be used to manually unlock the drives 52, 53, 54, 55, and preferably the entire device, for moving the shaft 56 by an external force. This may be a manual force. Such movement may for instance desired for a calibration of the drives 52, 53, 54, 55 and/or the position of the shaft 56. The housing 60 further comprises a display 65, indicating the devices status.

Figure 8 shows a detail of a suspension 71 according to the invention for a gripper 70. The suspension serves to compensate for the swing movement of the shaft 56 and therewith for the swing movement of the telescopic arm. Contrary to Delta robots, the robot according to the invention does not comprise parallelogram constructions that automatically compensate for the deviation from the default (often but not necessarily horizontal) orientation in which the gripper 70 is suspended. The suspension 71 has two degrees of freedom formed by axes P and Q, allowing swings in respective directions P' and Q'. These degrees of freedom may be used to compensate for the orientation due to the swing of the shaft 56 and be controlled such that they exactly compensate it, but they may also be used for purposive movement of the gripper (and a piece good carried by it). Due to a lack of mechanical coupling, the electric drives can be controlled independent from the swing of the shaft 56. The embodiments shown are examples only and do not limit the scope of the invention as defined in the following claims.

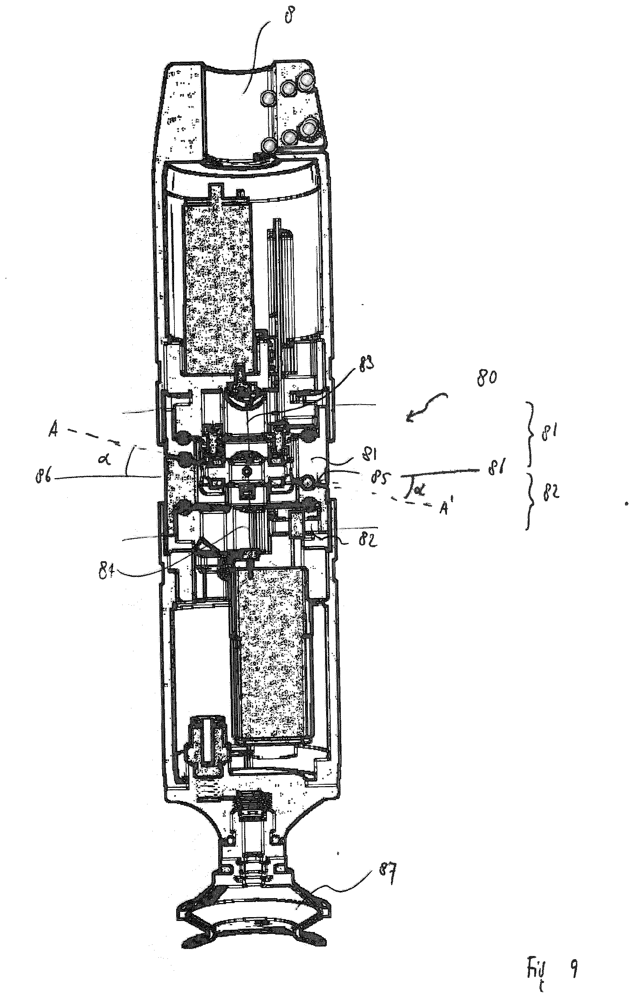

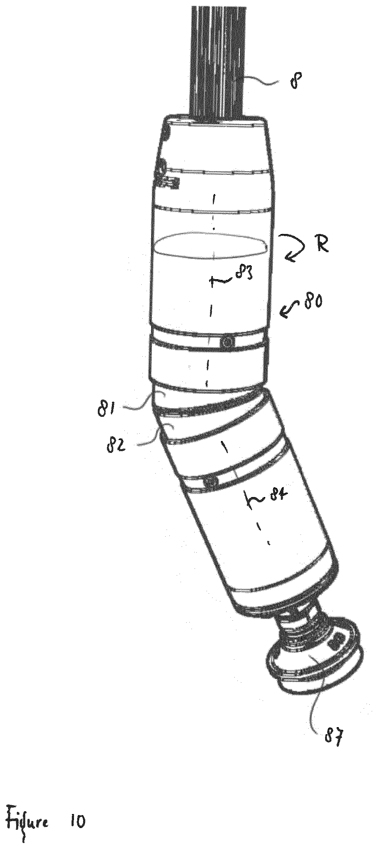

Figure 9 shows an alternative suspension 80 for the engaging means, comprising a pair of mutually rotatable bodies, 81, 82 each rotatable over an axis of rotation 83, 84 that is directed to the other, wherein the bodies lie against each other at a sectional plane 85, A-A' that is under an angle alpha with a plane 86 perpendicular to both axes of rotation, in an orientation wherein the axes coincide. (When rotated with respect to the orientation shown in figure 9, the axis 83, 84 no longer coincide). Both bodies 81, 82 are tapered, and for instance disc shaped, be it with the tapered side. The embodiment of the two bodies 81, 82 can be considered to form a cylinder, that is sliced under an angle with a plane perpendicular to its length axis. When their mutual rotational orientation changes, the angle under which both bodies extend changes, as depicted in figure 10. A second, straight, rotation may be used to direct the angle in the desired direction.

Figure 10 shows a perspective view of the suspension 80 from figure 9, now in a mutually rotated orientation. Visible is that the suspension 80 is coupled to the second part of the telescopic arm, and that it comprises a vacuum suction cup 87. A rotation R may be applied to adapt the orientation of the suction cup to its desired angle.

## Claims

1. Device for moving piece goods from a supply device to a receiving device, comprising:
- A supply device, such as a conveyor belt, for delivering piece goods in a plane;
- A receiving device, such as a tray, for receiving piece goods;
wherein
- A suspension point located above the plane, relative to which a first part of a:
- telescopic arm is suspended at a first location thereof so as to be rotatable about two axes of rotation,
- which axes of rotation each extend substantially parallel to the plane and at a, preferably straight, angle to each other, so that
- a second location, located at a distance towards the plane of the first location, formed by an end of the first part of the telescopic arm:
- is movable relative to the plane with a directional component in two mutually perpendicular directions parallel to the plane; and where
- the telescopic arm comprises a second part, which is telescopically movable relative to the first part in a direction from the first location to the second location, thus with a directional component from the suspension point to and from the plane,
- which second part is provided on a side facing the plane with an engaging means for engaging at least one of the piece goods, wherein the first and second parts of the telescopic arm are mutually rotatable about a rotation axis extending coaxially with respect to both parts, wherein all rotational and translational movements of the telescopic arm can be driven individually and controllably.

2. Device according to claim 1, wherein at least one of the first and second parts of the telescopic arm, preferably an outer casing thereof, is made of carbon.

3. Device according to any of the preceding claims, designed to extend the telescopic arm the more, the more the deflection around one of the axes of rotation is, in order to keep the engaging means within a certain distance from the plane.

4. Device according to any of the preceding claims, comprising a harmonic drive for driving the movement relative to the plane with a directional component in two mutually perpendicular directions parallel to the plane.

5. Device according to any of the preceding claims, comprising a direct drive for driving the telescopic movement of the second part relative to the first part in a direction from the first location to the second location, and for driving the rotation about the rotation axis extending coaxially with respect to both parts.

6. Device according to claim 4 or 5, comprising release means such as a knob, for unlocking the drives, for allowing movement of the telescopic arm by an external force.

7. Device according to any of the preceding claims, comprising a suspension for a gripper coupled to the second part of the telescopic arm, wherein the suspension is independently movable with respect to the second part of the telescopic arm, in particular over two rotational degrees of freedom.

8. Device according to claim 7, wherein the suspension is configured to compensate for the change of orientation due to the swing of the telescopic arm or be used for purposive movement of the gripper (and a piece good carried by it) with respect to the telescopic arm.

9. Device according to claim 7 or 8, comprising a pair of mutually rotatable bodies, each rotatable over an axis of rotation that is directed to the other, wherein the bodies lie against each other at a sectional plane that is under an angle with a plane perpendicular to both axes of rotation, in an orientation wherein the axes coincide.

10. Device according to claim 9, wherein both bodies are tapered, and in particular disc shaped, and more in particular wherein the two bodies form a cylinder, that is sliced under an angle with a plane perpendicular to its length axis.

11. Device according to any of claims claim 7 to 10, wherein the suspension is electrically drivable.

12. Device according to any of the preceding claims wherein the engaging means comprise a suction cup.

13. Assembly of several devices according to any one of the preceding claims, arranged in an array, configured to jointly pick piece goods in a first mutual orientation from the supply device and place them in a second orientation different from the first orientation on the receiving device, wherein each of the devices of the assembly has a working space or area, defined as the space or area wherein the engaging means can be moved, wherein the working areas of different devices overlap and in particular the multiple devices may be working in the overlapping area at the same time, that is, simultaneously.

14. Assembly according to claim 13, configured to move jointly picked piece goods from the a first mutual orientation to the a second mutual orientation via mutually crossing paths.

15. Assembly according to claim 13 or 14, wherein the devices have a common suspension point, wherein their shafts are at a mutual distance of less than 25 cm and in particular less than 22 cm and in particular between 10 and 20 cm, and/or about 15 cm.

16. Method for moving piece goods from a supply device to a receiving device, comprising picking up a piece good from a supply device of a device according to any of claims 1-12 and moving it to a receiving device of a device according to any of claims 1-12.

17. Method according to claim 16, comprising moving multiple piece goods simultaneously from supply devices to receiving devices of multiple devices according to any of claims 1-12, and changing the mutual orientation of the piece goods during the movement.

## Amended claims

### Amended claims in accordance with Rule 137(2) EPC.

1. Assembly of several devices for moving piece goods from a supply device to a receiving device, arranged in an array, each of the devices, comprising:
- A supply device, such as a conveyor belt, for delivering piece goods in a plane;
- A receiving device, such as a tray, for receiving piece goods;
wherein
- A suspension point located above the plane, relative to which a first part of a:
- telescopic arm is suspended at a first location thereof so as to be rotatable about two axes of rotation,
- which axes of rotation each extend substantially parallel to the plane and at a, preferably straight, angle to each other, so that
- a second location, located at a distance towards the plane of the first location, formed by an end of the first part of the telescopic arm:
- is movable relative to the plane with a directional component in two mutually perpendicular directions parallel to the plane; and where
- the telescopic arm comprises a second part, which is telescopically movable relative to the first part in a direction from the first location to the second location, thus with a directional component from the suspension point to and from the plane,
- which second part is provided on a side facing the plane with an engaging means for engaging at least one of the piece goods, wherein the first and second parts of the telescopic arm are mutually rotatable about a rotation axis extending coaxially with respect to both parts, wherein all rotational and translational movements of the telescopic arm can be driven individually and controllably;
- the devices configured to jointly pick piece goods in a first mutual orientation from the supply device and place them in a second orientation different from the first orientation on the receiving device, wherein each of the devices of the assembly has a working space or area, defined as the space or area wherein the engaging means can be moved, wherein the working areas of different devices overlap and in particular the multiple devices may be working in the overlapping area at the same time, that is, simultaneously, thus enabling a transition from a first mutual orientation to a second mutual orientation, wherein the piece goods follow paths that cross each other.

2. Assembly according to claim 1, configured to move jointly picked piece goods from the a first mutual orientation to the a second mutual orientation via mutually crossing paths.

3. Assembly according to claim 1 or 2, wherein at least one of the first and second parts of the telescopic arm, preferably an outer casing thereof, is made of carbon.

4. Assembly according to any of the preceding claims, designed to extend the telescopic arm the more, the more the deflection around one of the axes of rotation is, in order to keep the engaging means within a certain distance from the plane.

5. Assembly according to any of the preceding claims, comprising a harmonic drive for driving the movement relative to the plane with a directional component in two mutually perpendicular directions parallel to the plane.

6. Assembly according to any of the preceding claims, comprising a direct drive for driving the telescopic movement of the second part relative to the first part in a direction from the first location to the second location, and for driving the rotation about the rotation axis extending coaxially with respect to both parts.

7. Assembly according to claim 5 or 6, comprising release means such as a knob, for unlocking the drives, for allowing movement of the telescopic arm by an external force.

8. Assembly according to any of the preceding claims, comprising a suspension for a gripper coupled to the second part of the telescopic arm, wherein the suspension is independently movable with respect to the second part of the telescopic arm, in particular over two rotational degrees of freedom.

9. Assembly according to claim 8, wherein the suspension is configured to compensate for the change of orientation due to the swing of the telescopic arm or be used for purposive movement of the gripper (and a piece good carried by it) with respect to the telescopic arm.

10. Assembly according to claim 8 or 9, comprising a pair of mutually rotatable bodies, each rotatable over an axis of rotation that is directed to the other, wherein the bodies lie against each other at a sectional plane that is under an angle with a plane perpendicular to both axes of rotation, in an orientation wherein the axes coincide.

11. Assembly according to claim 10, wherein both bodies are tapered, and in particular disc shaped, and more in particular wherein the two bodies form a cylinder, that is sliced under an angle with a plane perpendicular to its length axis.

12. Assembly according to any of claims claim 8 to 11, wherein the suspension is electrically drivable.

13. Assembly according to any of the preceding claims wherein the engaging means comprise a suction cup.

14. Assembly according to claim any of the preceding claims, wherein the devices have a common suspension point, wherein their shafts are at a mutual distance of less than 25 cm and in particular less than 22 cm and in particular between 10 and 20 cm, and/or about 15 cm.

15. Method for moving piece goods from a supply device to a receiving device, comprising picking up a piece good from a supply device of a device according to any of claims 1-12 and moving it to a receiving device of a device according to any of claims 1-12.

16. Method according to claim 15, comprising moving multiple piece goods simultaneously from supply devices to receiving devices of an assembly according to any of claims 1-14, and changing the mutual orientation of the piece goods during the movement.
